# EUROPÄISCHE PATENTSCHRIFT

(11) **EP 3 890 157 B1**
(45) Veröffentlichungstag und Bekanntmachung des Hinweises auf die Patenterteilung: **10.05.2023**
(21) Anmeldenummer: 21020164.6
(22) Anmeldetag: 26.03.2021
(51) Int. Cl.: H02J 50/40, H02J 50/00, H02J 50/10, H02J 50/12, H02J 7/00, B60R 11/02, H04B 5/00

(54) **VORRICHTUNG ZUM KABELLOSEN LADEN**
WIRELESS CHARGING DEVICE
DISPOSITIF DE RECHARGE SANS CÂBLE

(30) Priorität: 02.04.2020 CZ 20201892
(43) Veröffentlichungstag der Anmeldung: 06.10.2021
(73) Patentinhaber: Skoda Auto a.s., 29301 Mladá Boleslav (CZ)
(72) Erfinder: Katzwinkel, Reiner, DE-38527 Meine (DE); Mlacki, Patrik, 29446 Semcice (CZ); Svec, Filip, 25301 Hostivice (CZ)

(56) Entgegenhaltungen:
- US-A1- 2015 288 067
- US-A1- 2018 198 313
- US-A1- 2019 229 765

## Beschreibung

Die vorliegende Erfindung betrifft eine Vorrichtung für ein Kraftfahrzeug, die mehrere externe Vorrichtungen zeitgleich kabellos laden kann und die gleichzeitig ein mobiles Signal passiv verstärkt.

Heutzutage ist das kabellose Laden bei Smartphones und weiteren elektronischen Vorrichtungen gewöhnlich. Üblicherweise erfolgt dieses Laden durch das Einlegen der Vorrichtung in das von einer an die Spannungsquelle angeschlossenen primären Spule generierte Magnetfeld, wobei die Vorrichtung eine sekundäre Spule aufweist, in der nach dem Einlegen in das Wechselmagnetfeld eine Spannung induziert wird, welche zum Laden des Akkus in der jeweiligen Vorrichtung dient.

In dem Stand der Technik sind Ladevorrichtungen für die Nutzung im Kraftfahrzeug bekannt, die für das kabellose Laden ausgelegt sind. Diese Vorrichtungen nutzen üblicherweise den Standard Qi, also die elektromagnetische Induktion zwischen der Flachspule in der Ladevorrichtung und der Flachspule in der aufzuladenden Vorrichtung.

Einige bekannte Ladevorrichtungen für die Nutzung im Kraftfahrzeug ermöglichen das zeitgleiche Aufladen von mehreren Vorrichtungen, oder weisen Elemente für die Verstärkung des mobilen Signals auf. Für die Signalverstärkung wird dabei ein sog. Aktor oder Kompensator verwendet, der eine Verbesserung der durch die Anordnung im Fahrzeug bedingten, verschlechterten Qualität des mobilen Signals durch aktive Kompensation der Verluste ermöglicht, die in den kabelgebundenen sowie kabellosen Verbindungen, über welche das Signal zum Telefon in der Ladevorrichtung übertragen wird, verursacht werden.

Aus der US 2018/0198313 A1, die zur Formulierung des Oberbegriffs von Patentanspruch 1 herangezogen wurde, ist ein drahtloses Ladegerät für ein mobiles Endgerät in einem Fahrzeug bekannt, das einen Leistungssensor umfasst, der so konfiguriert ist, dass er drahtlos Leistung an ein erstes mobiles Endgerät überträgt. Ein Prozessor ist vorgesehen, der so konfiguriert ist, dass er Modellinformationen des ersten mobilen Endgeräts erfasst und die Leistungsparameter auf der Grundlage der Modellinformationen anpasst.

Die US 2019/0229765 A1 betrifft eine drahtlose Ladevorrichtung, die einen Kommunikationssignalkompensator enthält, wobei ein Kommunikationssignalkompensator einen Leistungsdetektor umfasst, der so konfiguriert ist, dass er eine Größe eines Kommunikationssignals erfasst, das über jede der mehreren Antennen empfangen wird, und eine Steuereinheit, die so konfiguriert ist, dass sie ein Kommunikationssignal mit der größten Signalgröße als das Erfassungsergebnis erfasst, eine Antenne auswählt, die dem Kommunikationssignal mit der größten Signalgröße unter den mehreren Antennen entspricht, und an die Koppelantenne ein Schaltsteuersignal zum Steuern des Schalters sendet, der mit der ausgewählten Antenne verbunden werden soll.

Das Dokument WO2010/028541 beschreibt beispielsweise eine Fahrzeughalterung für ein mobiles Telefon, die ein kabelloses Laden des gehaltenen Telefons und zeitgleich das Laden einer zweiten Vorrichtung ermöglicht, die in diesem Dokument eine Bluetooth Freisprechanlage ist. Das zeitgleiche Laden von zwei Telefonen sowie eine Signalverstärkung werden dabei außer Betracht gelassen.

In dem Stand der Technik ist keine Ladevorrichtung bekannt, die zeitgleiches Laden von mehreren Vorrichtungen und zugleich die Verstärkung des mobilen Signals ermöglicht. Die Erweiterung der bekannten Vorrichtungen mit einem Aktor für die Kompensation der Signalqualitätsverluste um eine zweite Ladefunktionalität, die zum Laden einer zweiten Vorrichtung dient, führt nämlich zur gegenseitigen Beeinflussung der aufzuladenden Mobiltelefone und zur Entstehung sog. parasitärer Kopplung. Wegen dieser parasitären Kopplung verhalten sich diese Telefone als Regenerativverstärker des mobilen Signals, beispielsweise kommt es zum Bandbreitensprung während eines Gesprächs, was unerwünscht ist und in einigen Ländern sogar illegal sein kann. Es ist deshalb geeignet, der parasitären Kopplung vorzubeugen.

Deshalb wäre also geeignet eine Lösung vorzuschlagen, welche das kabellose Laden von zwei Vorrichtungen im Fahrzeug zeitgleich ermöglicht und die beim Laden von zwei Mobiltelefonen eine Verstärkung der Qualität des mobilen Signals gewährt, ohne dass es zur negativen gegenseitigen Beeinflussung zwischen diesen Telefonen kommt.

Diese Aufgabe wird gelöst durch eine Vorrichtung mit den Merkmalen von Patentanspruch 1. Demnach ist eine Vorrichtung zum kabellosen Laden vorgesehen, die dazu eingerichtet ist, in einem Fahrzeug angeordnet zu werden. Sie weist zwei Aufladungsflächen auf, wobei jede Aufladungsfläche wenigstens eine Spule zum Generieren eines Magnetfelds umfasst, wobei diese Vorrichtung zum kabellosen Laden ferner ein System für passive Verstärkung des mobilen Signals mit mindestens einer Antennenstruktur für die Aufladungsflächen umfasst. Erfindungsgemäß umfasst das System für passive Verstärkung zwei Antennenstrukturen für die Aufladungsflächen und weiterhin einen Signalteiler, wobei der Signalteiler eingerichtet ist, mit einer Fahrzeugantenne des Fahrzeugs verbunden zu werden, wobei der Signalteiler mit einer unter der ersten Aufladungsfläche angeordneten ersten Antennenstruktur für die Aufladungsfläche und mit einer unter der zweiten Aufladungsfläche angeordneten zweiten Antennenstruktur für die Aufladungsfläche verbunden ist, wobei der Signalteiler ein 3dB Hybridkoppler ist.

Die genannten Nachteile werden partiell durch die im Fahrzeug angeordnete Vorrichtung zum kabellosen Laden gelöst, die zwei Aufladungsflächen aufweist. Das Fahrzeug umfasst eine Fahrzeugantenne und jede Aufladungsfläche umfasst wenigstens eine Spule zur Magnetfeldgenerierung. Die vorliegende Vorrichtung zum kabellosen Laden umfasst ferner ein System zur passiven Verstärkung des mobilen Signals, das einen Signalteiler und zwei Antennenstrukturen für die Aufladungsfläche aufweist. Der Signalteiler ist mit der Fahrzeugantenne, mit einer im Bereich der Aufladungsfläche angeordneten ersten Antennenstruktur für die Aufladungsfläche und mit einer im Bereich der Aufladungsfläche angeordneten zweiten Antennenstruktur für die Aufladungsfläche verbunden.

Die erfindungsgemäße Vorrichtung verstärkt also das Signal durch die direkte Verbindung mit der Fahrzeugantenne, ohne einen Kompensator oder andere zusätzlichen Vorrichtungen zu nutzen. Es handelt sich um sogenannte passive Signalverstärkung. Dadurch wird eine Signalverstärkung ermöglicht, welche die durch die Abschirmung vom Fahrzeug verursachten Verluste kompensiert, ohne dass eine parasitäre Kopplung beim zeitgleichen Aufladen von zwei Mobiltelefonen entsteht. Die Nutzung einer passiven statt einer aktiven Signalverstärkung reduziert darüber hinaus die Kosten für die Herstellung der Vorrichtung zum kabellosen Laden.

Es wurde ermittelt, dass die beschriebene Nutzung der passiven Signalverstärkung eine fast vergleichbare Signalqualität gewährt, wie bei der Nutzung einer für die Vorrichtungen für das kabellose Laden mit einer einzigen Aufladungsfläche bekannten aktiven Verstärkung, und zwar wenigstens in Situationen, wenn die Abschirmleistung des Fahrzeuges bei > 20 dB liegt.

Die Komponenten und Leitungen, welche die Fahrzeugantenne mit den Antennenstrukturen für die Aufladungsfläche verbinden, sind vorteilhaft an der Leiterplatte mit den Antennenstrukturen angeordnet. Die Außenabmessungen der Leiterplatte mit Antennenstrukturen entspricht dabei unter gewöhnlichen Umständen etwa den Abmessungen der marktüblichsten Telefone mit einer Diagonale von 5", so wie es bei den Leiterplatten mit den für die kabellosen Ladevorrichtungen genutzten Komponenten entsprechend dem Stand der Technik gewöhnlich ist.

Durch die Verlängerung der Platte mit Antennenstrukturen gegenüber diesem gewöhnlichen Stand, beispielsweise um etwa 20 mm, kann vorteilhaft eine weitere Verbesserung der Qualität des mobilen Signals für ein breites Spektrum von Mobiltelefonen (insbesondere für längere Mobiltelefone) erzielt und die Kopplungswerte bei der passiven Signalverstärkung verbessert werden. Die Leiterplatte mit Antennenstrukturen überragt also vorteilhaft die aufzuladenden Vorrichtungen.

Der Signalteiler ist erfindungsgemäß ein 3dB Hybridteiler, der eine gleichmäßige Signalverteilung an die zwei Antennenstrukturen für die Aufladungsflächen ermöglicht.

In besonders bevorzugter Ausführung umfasst die erfindungsgemäße Vorrichtung ferner eine datentechnisch mit dem Fahrzeugbus verbundene Steuereinheit. Damit wird eine Kommunikation der erfindungsgemäßen Vorrichtung mit weiteren elektronischen Systemen im Fahrzeug ermöglicht. Beispielsweise wird dann die Anzeige des Ladezustandes im Infotainment des Fahrzeuges ermöglicht. Die Steuereinheit der Vorrichtung zum kabellosen Laden besorgt dabei zum Beispiel den Beginn der Aufladung beim Auflegen der externen Vorrichtung auf die Aufladungsfläche, das Beenden der Aufladung beim Erreichen des Vollladezustandes, die Steuerung der Ladeleistung usw.

Mit Vorteil wird genutzt, dass jede Aufladungsfläche drei Spulen aufweist. Diese Spulen weisen vorteilhaft eine partielle Überlappung auf. Die Nutzung von mehreren Spulen, insbesondere mehreren gegenseitig sich überlappenden Spulen, ermöglicht eine gleichmäßigere Aufladung überall auf der Aufladungsfläche. Beispielsweise können somit effektiv weniger geräumige externe Vorrichtungen aufgeladen werden, ohne dass eine solche Vorrichtung auf eine konkrete Stelle auf der Aufladungsfläche aufgelegt werden muss.

Vorteilhaft umfasst die Vorrichtung zum kabellosen Laden ferner ein Alu-Kühlgitter oder eine gerippte Kühlplatte. Dieses Kühlgitter ermöglicht beispielsweise die passive Luftzufuhr und/oder die Ableitung der Wärme von/zur erfindungsgemäßen Vorrichtung durch Konvektion. Damit sind die negativen Folgen von höheren Temperaturen auf den Verlauf des Ladens oder den Akku-Zustand eingeschränkt. Das Kühlgitter umfasst vorteilhaft einige eingebaute Kühlkanäle, die wenigstens durch einen Teil der Gitterstärke verlaufen und eine Steigerung der Kühlwirksamkeit ermöglichen. Es wurde ermittelt, dass die Nutzung der mit Kühlkanälen ausgestatteten Kühlgitter die Kühlwirksamkeit um 9 % erhöht. Diese verbesserte Kühlung bewirkt eine Steigerung der Ladewirksamkeit.

Jede Ladematte weist vorteilhaft Antirutschelemente auf. Dadurch wird das Risiko einer unerwünschten Bewegung der aufzuladenden Vorrichtung infolge der Bewegung des Fahrzeuges reduziert. Die unerwünschte Bewegung der aufzuladenden Vorrichtung könnte zum Beispiel das kabellose Laden unterbrechen.

Jede Ladematte kann gegenüber der waagerechten Richtung um einen Winkel von wenigstens 15° geneigt werden, wobei dieser in die Fahrtrichtung abfällt. Durch diese Neigung wird ein visueller Kontakt des Fahrers mit der aufzuladenden Vorrichtung verhindert, der Fahrer wird somit beispielsweise durch Aufleuchten des Handybildschirms nicht gestört. Bevorzugt beträgt der angeführte Winkel mindestens 20°.

Die Vorrichtung zum kabellosen Laden umfasst ferner vorteilhaft eine Vorrichtung für drahtlose Kommunikation mit der auf der Aufladungsfläche aufgelegten Vorrichtung, d.h. mit der aufzuladenden externen Vorrichtung. Die Vorrichtung für die drahtlose Kommunikation ermöglicht die Verbindung der aufzuladenden Vorrichtung mit weiteren Vorrichtungen im Fahrzeug. Beispielsweise wird die Nutzung der Funktion des schlüssellosen Startens beim Auflegen des elektronischen Fahrzeugschlüssels auf die Vorrichtung zum kabellosen Laden ermöglicht, sodass der elektronische Schlüssel ohne Einschränkung seiner Funktionalität aufgeladen werden kann. Ähnlich kann zum schlüssellosen Starten auch das Mobiltelefon mit geeigneter Kommunikationshardware und -software genutzt werden.

Die Vorrichtung zur drahtlosen Kommunikation kann eine beliebige Kommunikationstechnologie sein, die für die Verbindung von Komponenten oder Vorrichtungen keine hardwareseitige (d.h. insbesondere kabel- oder drahtgebundene) Verbindung erfordert. Die Vorrichtung zur drahtlosen Kommunikation kann also auf den Technologien wie Bluetooth (d.h. Standard IEEE 802.15.1), Zigbee (d.h. Standard IEEE 802.15.4), WLAN (d.h. Standard 802.11(b)) und eventuell gemäß weiterer Standards IEEE 802.11 basieren. Ferner können jedwede weitere funk-, LWL- oder andere drahtlosbasierte Kommunikationstechnologien genutzt werden.

Bevorzugt stellt die Vorrichtung zur drahtlosen Kommunikation einen NFC-Leser dar, die drahtlose Kommunikation ist also die NFC-Kommunikation. Die erfindungsgemäße Vorrichtung kann auch für mehrere Typen der drahtlosen Kommunikation, zum Beispiel für die Kommunikation mittels NFC, Bluetooth sowie WLAN, ausgelegt werden.

Die Vorrichtung zum kabellosen Laden kann an der Mittelkonsole des Fahrzeugs angebracht werden. Diese Anordnung an der Mittelkonsole ermöglicht dem Fahrer sowie Beifahrer den Zugriff auf die erfindungsgemäße Vorrichtung.

Ebenso besteht die Möglichkeit, die Vorrichtung zum kabellosen Laden an die Schalttafel oder jedwede andere geeignete Stelle im Fahrzeug anzuordnen.

Vorteilhaft wird genutzt, dass das System für passive Verstärkung des mobilen Signals, das Bestandteil der erfindungsgemäßen Vorrichtung ist, aus einem Signalteiler und zwei Antennenstrukturen für die Aufladungsfläche besteht. Der Signalteiler ist dabei mit der Fahrzeugantenne, mit einer im Bereich der ersten Aufladungsfläche angeordneten ersten Antennenstruktur für die Aufladungsfläche und mit einer im Bereich der zweiten Aufladungsfläche angeordneten zweiten Antennenstruktur für die Aufladungsfläche verbunden. Die Verbindung des Signalteilers mit der Fahrzeugantenne wird dabei vorteilhaft durch einen Antennenstecker realisiert. Das System für passive Verstärkung des mobilen Signals muss also keine weitere Komponente umfassen, was die Komplexität und den Preis der Vorrichtung zum kabellosen Laden reduziert.

### Erläuterung der Zeichnungen

Die Darstellung der Erfindung wird weiter anhand von Ausführungsbeispielen erläutert, die unter Nutzung von Zeichnungen beschrieben sind, dabei zeigt die:
Fig. 1 ein Fahrzeug mit schematisch dargestellter Vorrichtung zum kabellosen Laden nach der vorliegenden Erfindung, wobei diese Vorrichtung mit der Fahrzeugantenne verbunden ist,
Fig. 2 eine schematische Darstellung der Vorrichtung zum kabellosen Laden mit einem mit der Fahrzeugantenne verbundenen System für passive Verstärkung des mobilen Signals,
Fig. 3 eine Draufsicht auf die erfindungsgemäße Vorrichtung mit angedeuteter Anordnung der Aufladungsflächen und die Ansichten auf die Vorrichtung von zwei benachbarten Seiten,
Fig. 4 eine perspektivische Ansicht von unten auf die Vorrichtung zum kabellosen Laden, in der zwei Kühlgitter mit Kühlkanälen sichtbar sind, und
Fig. 5 eine Explosionsdarstellung der erfindungsgemäßen Vorrichtung.

Die aufgeführten Ausführungen stellen die Ausführungsvarianten der Erfindung dar, die jedoch aus Sicht des Schutzumfanges keinen einschränkenden Einfluss haben.

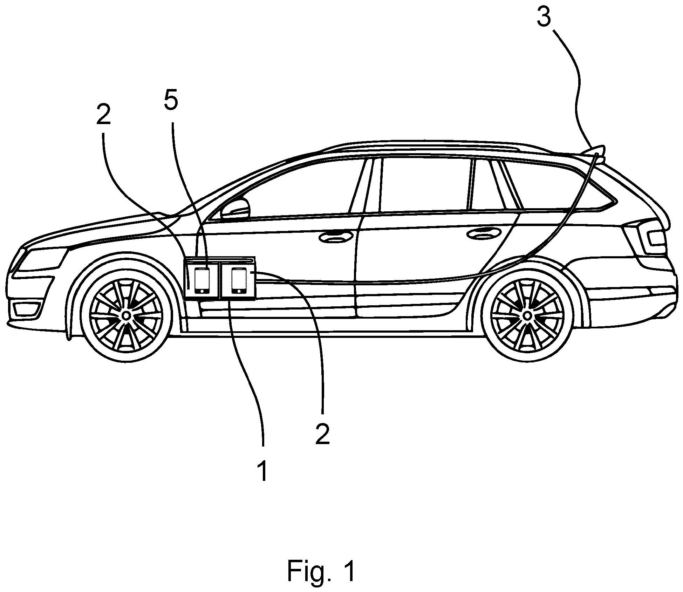

In der Fig. 1 ist schematisch ein Personenkraftfahrzeug, das eine Fahrzeugantenne 3 und Vorrichtung 1 zum kabellosen Laden nach der vorliegenden Erfindung umfasst. Diese Vorrichtung 1 ist vorteilhaft in der Mittelkonsole des Fahrzeugs eingebaut und umfasst den Körper der Vorrichtung, zwei Aufladungsflächen 2 und ein System für passive Verstärkung des mobilen Signals. Jede Aufladungsfläche 2 umfasst drei Spulen, die zur Generierung des Wechselmagnetfeldes dienen, wenn sie mit Strom gespeist werden. Die drei Spulen werden für die Schaffung eines etwa gleichmäßigen Magnetfeldes auf größerer Fläche genutzt, sodass das Magnetfeld für das Laden von beliebigen Vorrichtungen, welche das kabellose Laden nach dem Standard Qi unterstützen, auf einer größeren Fläche ausreichend stark ist. Im betrachteten Ausführungsbeispiel überlappen sich dabei diese Spulen teilweise gegenseitig, um ein gleichmäßigeres Magnetfeld zu erzielen. Dank der Nutzung von drei Spulen ist es dann möglich, ein gleichmäßiges Laden von unterschiedlich großen, auf die Aufladungsfläche 2 wohin auch immer aufgelegten Vorrichtungen zu erzielen. Die Leistung jeder Aufladungsfläche 2 beträgt in dieser Ausführung 5 W.

Alternativ ist es möglich, die Aufladungsflächen 2 mit einer Leistung von 15 W zu nutzen. Ferner können auch Aufladungsflächen 2 mit beliebiger anderer Leistung genutzt werden.

Alternativ kann jede Aufladungsfläche 2 auch eine andere Anzahl von Spulen umfassen, zum Beispiel kann für jede Aufladungsfläche 2 eine Spule ausreichen oder jede Aufladungsfläche 2 mehr als drei Spulen aufweisen. In einigen Ausführungen kann jede Aufladungsfläche 2 eine andere Anzahl von Spulen aufweisen.

Das System für passive Verstärkung des mobilen Signals umfasst einen Signalteiler 1 (gewöhnlich bezeichnet mit dem englischen Ausdruck Coupler) und zwei Antennenstrukturen für die Aufladungsfläche 2. Der Signalteiler 4 ist mit der Fahrzeugantenne 3 mit einem Antennenkabel mit Antennenstecker 6 verbunden, in dieser Ausführung ist der Antennenstecker 6 ein Stecker des Standards FAKRA (Fachkreis Automobil). Der Signalteiler 4 ist ferner mit beiden Antennenstrukturen für die Aufladungsfläche 2 verbunden. In dieser Ausführung ist als Signalteiler 4 ein 90° 3dB Hybridkoppler (gewöhnlich bezeichnet als 90° 3dB Hybrid-Coupler).

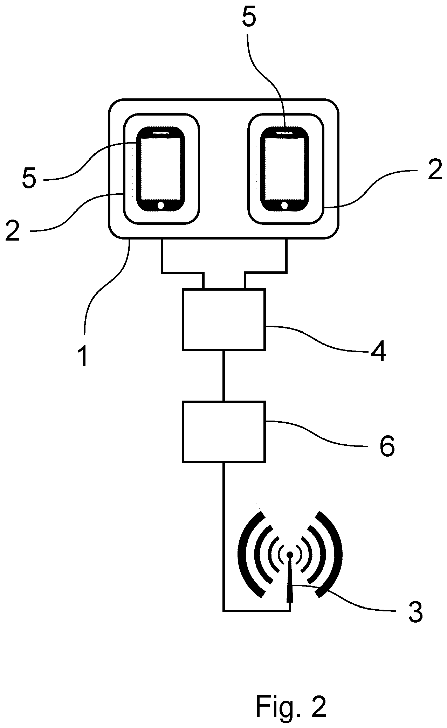

Jede der Antennenstrukturen für die Aufladungsfläche 2 ist Bestandteil einer der Aufladungsflächen 2 und dient also für die Zuleitung des verstärkten Signals zur aufzuladenden Vorrichtung 5 an der jeweiligen Aufladungsfläche 2. Schematisch ist die erfindungsgemäße Vorrichtung 1 zum kabellosen Laden in Fig. 2 dargestellt.

In einigen alternativen Ausführungen besteht das System für passive Verstärkung des mobilen Signals aus einem Signalteiler 4 und zwei Antennenstrukturen für die Aufladungsfläche 2. Der Signalteiler 4 ist mit der Fahrzeugantenne 3 durch ein Antennenkabel mit einem Antennenstecker 6 und mit beiden Antennenstrukturen für die Aufladungsfläche 2 verbunden. Das System für passive Verstärkung des mobilen Signals umfasst also keine weitere Komponente. In weiteren Ausführungen besteht das System für passive Verstärkung des mobilen Signals aus einem Signalteiler 4 und zwei Antennenstrukturen für die Aufladungsfläche 2, die wie oben beschrieben miteinander verbunden sind, und aus einem Widerstand, der ebenfalls mit dem Signalteiler 4 verbunden ist.

Die grundsätzliche Eigenschaft des Systems für passive Verstärkung des mobilen Signals ist also die direkte Anbindung der Fahrzeugantenne 3 an die Antennenstrukturen für die Aufladungsfläche 2 über den Antennenstecker 6 und Signalteiler 4, ohne Nutzung von jeglichen komplizierten, aktiven Komponenten, welche die Herstellung verteuern würden und beim zeitgleichen Laden von zwei Telefonen die Entstehung einer parasitären Kopplung verursachen könnten, die aus praktischen sowie legislativen Gründen zu vermeiden ist. Die Nutzung des beschriebenen Systems für passive Verstärkung des mobilen Signals ist vorteilhaft insbesondere für Fahrzeuge, deren Abschirmwirksamkeit 20 dB überschreitet.

In einem Ausführungsbeispiel weist jede Aufladungsfläche 2 eine Gummimatte auf (beispielsweise aus EPDM (Ethylen-Propylen-Dien-Kautschuk hergestellt)), die sicherstellt, dass sich die auf der Aufladungsfläche 2 angeordnete aufzuladende Vorrichtung 5 nicht spontan bewegen und so aus der Vorrichtung zum kabellosen Laden nicht ausfallen kann und/oder das Laden in Folge der Bewegung nicht unterbrochen wird.

Damit es zu keiner Überhitzung der Vorrichtung 1 zum kabellosen Laden kommt, ist im unteren Bereich der Vorrichtung ein Alu-Kühlgitter 9 angeordnet, welches die Wärme ableitet und einen passiven Durchzug der Luft ermöglicht. Vorteilhaft weisen die Alu-Kühlgitter Kühlkanäle 17 auf, welche neben den das genannte Kühlgitter 9 bildenden Rippen geführt werden, wobei die Kühlkanäle 17 in der dargestellten Ausführung rechteckig sind. Alternativ sind auch andere Formen der Kühlung denkbar, z.B. durch eine anders ausgeführte passive Luftzufuhr oder aktive Kühlung mittels der Anbindung an das Luftleitsystem des Fahrzeuges, mithilfe von Lüftern, Peltier-Elementen usw. Die Elektroeinspeisung für das Laden und eventuell auch für die Kühlung und/oder Einspeisung weiterer, beispielsweise Kommunikationskomponenten der erfindungsgemäßen Vorrichtung erfolgt durch das Anschließen an den Fahrzeug-Akku, z.B. durch das Anschließen an den 12V-Stecker, der üblicherweise in der Mitte der Schalttafel oder an der Mittelkonsole angeordnet ist. Vorteilhaft ist die Einspeisung der Vorrichtung 1 zum kabellosen Laden mittels des MQS Steckers (Micro Quadlok System) sichergestellt.

Die dargestellte Vorrichtung 1 zum kabellosen Laden ist in der Mittelkonsole so eingebaut, dass die Aufladungsflächen 2, und somit auch die an den Aufladungsflächen 2 aufgelegten Vorrichtungen von oben zugänglich sind. Damit die aufzuladende Vorrichtung 5, z.B. ein Smartphone, den Fahrer nicht ablenkt, sind die Aufladungsflächen 2 ungefähr um 20° nach vorne in die Fahrtrichtung geneigt. Der Fahrer hat dann keine gute Sicht auf den Telefonbildschirm und so droht keine Ablenkung durch das Telefon.

Der Körper der Vorrichtung 1 zum kabellosen Laden ist in dieser Ausführung aus einem Kunststoffdruckgussteil hergestellt, das als Träger für weitere Komponenten der Vorrichtung dient. Der Körper ist dabei in der Mittelkonsole mittels Kunststoffvorsprüngen eingebaut, beispielsweise mittels Clips oder Dornen, die in komplementären Ausnehmungen eingerastet oder an den Rändern in der Montageöffnung an der Oberseite der Mittelkonsole befestigt sind. Alternativ kann der Körper der Vorrichtung in die Mittelkonsole eingeklebt oder eingeschraubt werden. In alternativen Ausführungen kann die erfindungsgemäße Vorrichtung auch anderswo als in der Mittelkonsole, z.B. an oder in der Schalttafel angeordnet werden. In der Mittelkonsole kann die Vorrichtung zwischen den Vordersitzen und/oder in der Nähe der Hintersitze angeordnet sein, damit auch die hinteren Fahrgäste eine Zugriffsmöglichkeit haben.

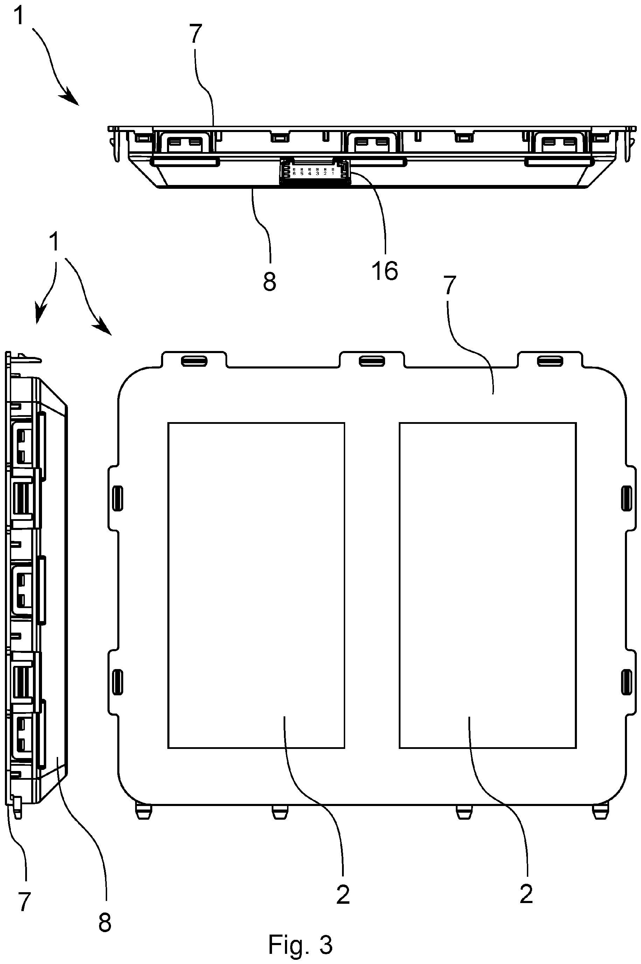

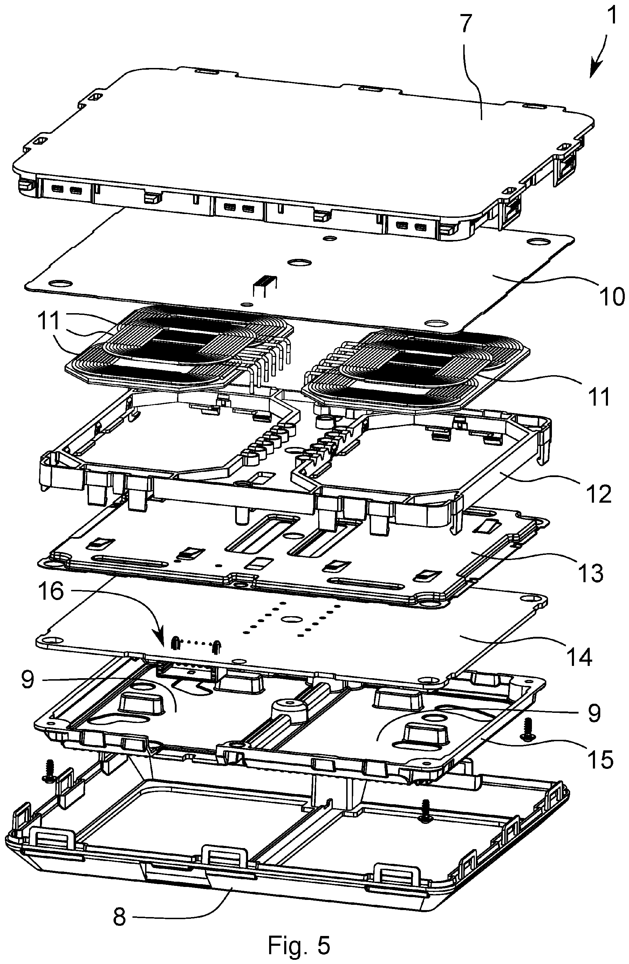

In der in Fig. 3 bis 5 dargestellten Ausführung stellt der Körper der Vorrichtung 1 zum kabellosen Laden ein Gehäuse dar, das einen Gehäuseoberteil 7 und einen Gehäuseunterteil 8 umfasst, zwischen denen weitere Komponenten der Vorrichtung angeordnet sind. Die Ausdrücke obere und untere, bzw. oberhalb und unterhalb, sind hier auf die in der Mittelkonsole eingebaute Vorrichtung 1 zum kabellosen Laden bezogen, wo die aufzuladende Vorrichtung 5 auf die obere Seite der Vorrichtung 1 zum kabellosen Laden aufgelegt wird und die untere Seite hin zum Fahrwerk ausgerichtet ist. Unter dem Gehäuseoberteil 7 ist eine Platte 10 mit den zum Anschließen der Fahrzeugantenne 3 dienenden Antennenstrukturen, s. Fig. 5. Die Platte 10 mit den Antennenstrukturen, vorteilhaft eine Leiterplatte, trägt auch den Antennenstecker 6, zu dem der Zugang für das Anschließen des Antennenkabels durch das Gehäuse hindurch ermöglicht ist.

Unter der Platte 10 mit Antennenstrukturen befinden sich die Spulen 11, also wie oben beschrieben drei Spulen 11 für jede Aufladungsfläche 2. Die Spulen 11 sind in einem Spulenhalter 12 befestigt. Jede Aufladungsfläche 2 besteht also aus der Komponente des Gehäuses, der Komponente der Platte 10 mit Antennenstrukturen, der Dreiergruppe von Spulen 11, der Komponente des Spulenhalters 12, dem Kühlgitter 9 usw. Ferner umfassen die Aufladungsflächen 2 vorteilhaft die nicht dargestellten Antirutschelemente in dem oberen Teil des Gehäuses 7.

Unter dem Spulenhalter 12 befindet sich die Abschirmplatte 13, welche den Durchgang des durch die Spulen 11 generierten Magnetfeldes abwärts zu den an der Leiterplatte 14 angeordneten elektronischen Komponenten sowie den Durchgang des Magnetfeldes aufwärts einschränkt und so die sogenannte elektromagnetische Kompatibilität der Vorrichtung 1 zum kabellosen Laden sicherstellt. Die elektromagnetische Kompatibilität ist eine Eigenschaft der jeweiligen elektronischen Vorrichtung, dank derer diese Vorrichtung durch ihre elektromagnetische Energie die anderen Vorrichtungen oder andere eigene Komponenten nicht oder zumindest weniger negativ beeinflusst.

Die Leiterplatte 14 trägt den Einspeisungsstecker 16, der die Einspeisung der Vorrichtung 1 zum kabellosen Laden mit Energie besorgt. In dieser Ausführung wird ein sog. MQS-Stecker verwendet, der neben den Pins für Einspeisung gleichzeitig auch Pins für die Anbindung der Vorrichtung 1 zum kabellosen Laden an den CAN-Bus des Fahrzeugs umfasst. Alternativ kann auch ein anderer Einspeisungsstecker 16 verwendet werden, beispielsweise kann der Einspeisungsstecker 16 separat von einem weiteren Stecker für die Datenkommunikation ausgestaltet sein. Die Leiterplatte 14 trägt oder kann in einigen Ausführungen eine Reihe nicht dargestellter Komponenten tragen, z.B. einen Chip für NFC-Kommunikation, eine Steuereinheit, beispielsweise einen Mikrocontroller, einen Temperaturfühler, CAN-Transceiver usw.

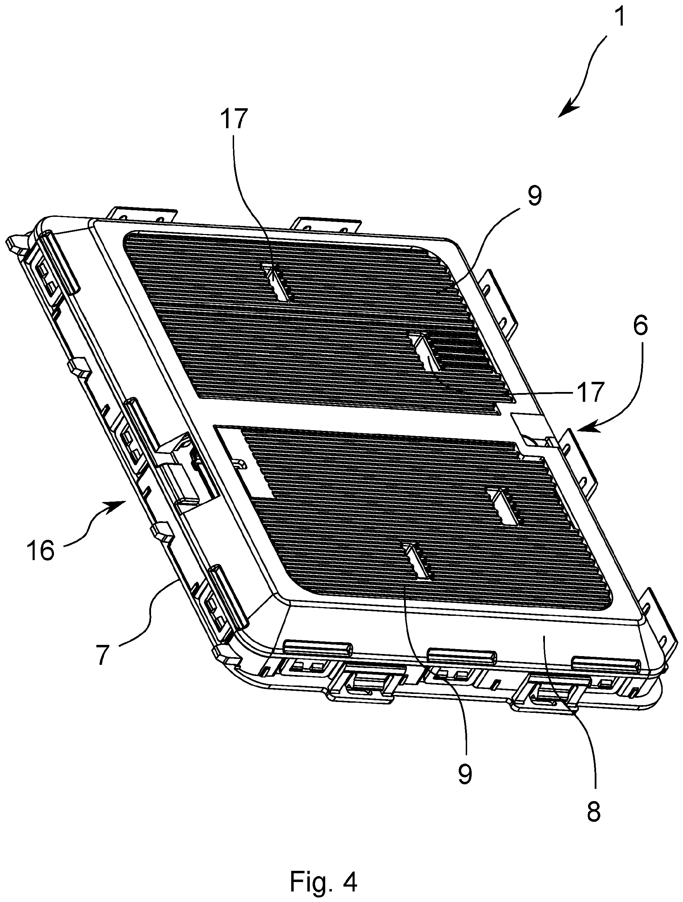

Unterhalb der Leiterplatte 14 ist ein Kühler 15 angeordnet, der zwei Kühlgitter 9 aufweist. Unter dem Kühler 15 befindet sich der untere Gehäuseteil 8, der zwei Öffnungen für die Kühlgitter 9 aufweist, wie in der Fig. 4 dargestellt ist. Die in einer Explosionsdarstellung in Fig. 5 dargestellten genannten Komponenten sind miteinander zum Beispiel verschraubt oder verklebt. Wie beispielsweise in den Seitenansichten in Fig. 3 dargestellt ist, sind der obere Gehäuseteil 7 und der untere Gehäuseteil 8 miteinander mittels flexibler Kunststoffklemmen an einer Komponente verbunden, die in die Vorsprünge an der zweiten Komponente einrasten.

In alternativen Ausführungen kann die erfindungsgemäße Vorrichtung weitere Komponenten umfassen, oder muss einige der oben genannten Komponenten nicht enthalten, eventuell können die Anordnung und die Form der Komponente abweichend sein.

Die an der Instrumententafel angeordnete erfindungsgemäße Vorrichtung kann beispielsweise so ausgerichtet sein, dass der obere Gehäuseteil 7 eher nach hinten (d.h. hin zum Fahrgastraum) als nach oben ausgerichtet ist und so dem Fahrer einen visuellen Kontakt mit dem aufzuladenden Telefon ermöglicht, sodass das Telefon für das Navigieren dienen kann. Beispielsweise kann eine Aufladungsfläche 2 zum Fahrer hin und zweite zum Beifahrer hin ausgerichtet sein. Bevorzugt umfasst dann der obere Gehäuseteil 7 einen Käfig oder Halter für die Aufnahme der aufzuladenden Vorrichtung 5.

Die erfindungsgemäße Vorrichtung umfasst ferner eine Steuereinheit, welche die Betätigung des Ladeablaufs und der Kommunikation der Vorrichtung 1 zum kabellosen Laden und eventuell auch der aufzuladenden Vorrichtungen 5 mit weiteren Fahrzeugsystemen ermöglicht. Diese Steuereinheit, die einen eigenen Bus aufweisen kann, ist beispielsweise mit dem üblichen CAN-Bus des Fahrzeuges verbunden. Die Informationen über den Ladezustand können dann auf dem Bildschirm der Instrumententafel angezeigt werden. Das aufzuladende Telefon kann durch die erfindungsgemäße Vorrichtung mit einer Freisprechanlage u.Ä. verbunden sein. In einigen Ausführungen der Vorrichtung 1 zum kabellosen Laden umfasst diese eine Vorrichtung für kabellose Kommunikation mit den aufzuladenden Vorrichtungen, beispielsweise einen NFC-Leser, Bluetooth-Sender/Empfänger usw.

Beim Auflegen einer externen Vorrichtung auf die Aufladungsfläche 2 beginnt die Aufladung dieser Vorrichtung, sofern diese nicht vollgeladen ist. Vorteilhaft wird an dem Bildschirm der Instrumententafel die Information über den Ladeablauf angezeigt. Der Ladeablauf (z.B. Leistung) wird dann durch die Vorrichtung 1 zum kabellosen Laden zusammen mit dem Lademodul der jeweiligen externen Vorrichtung koordiniert. Der Ladeablauf kann dabei durch den Stand des aufzuladenden Akkus, die Temperatur der Umgebung oder der aufzuladenden oder aufladenden Vorrichtung, die Position der externen Vorrichtung gegenüber der Aufladungsfläche 2, insbesondere den Abstand von der Aufladungsfläche 2 usw., beeinflusst werden.

Dank der Verbindung der erfindungsgemäßen Vorrichtung mit der Fahrzeugantenne 3 wird das Signal automatisch verstärkt. Es handelt sich dabei um passive Signalverstärkung, sodass kein Kompensator oder eine andere aktive Komponente für die Signalverstärkung verwendet wird. Beim Auflegen der externen Vorrichtung auf die Aufladungsfläche 2 kann es automatisch zur kabellosen kommunikativen Verbindung der jeweiligen externen Vorrichtung mit der Vorrichtung 1 zum kabellosen Laden z.B. mittels der NFC-Technologie kommen.

Auch nach dem Beenden des Ladens, oder beim Auflegen einer vollgeladenen Vorrichtung auf die Aufladungsfläche 2 läuft die Funktion der passiven Signalverstärkung und eventuell auch die Kommunikation der externen Vorrichtung mit anderen, an den CAN-Bus angeschlossenen Vorrichtungen weiter. Die passive Signalverstärkung und/oder Kommunikation der externen Vorrichtung mit weiteren Vorrichtungen über die Vorrichtung 1 zum kabellosen Laden kann dabei auch für externe Vorrichtungen genutzt werden, die für kabelloses Laden nicht ausgelegt sind oder nicht den Standard Qi nutzen.

Die externe oder aufzuladende Vorrichtung 5 kann eine beliebige Vorrichtung sein, die der Anwender mittels der erfindungsgemäßen Vorrichtung aufladen möchte, oder eine Vorrichtung, für die der Anwender das Signal verstärken oder die kabellose Kommunikation mit weiterer, im Fahrzeug angeordneter Elektronik (z.B. mittels des CAN-Bus) ermöglichen will, zum Beispiel mit der Wegfahrsperre für das schlüssellose Starten oder mit dem beim Fahrer angeordneten Mikrofon für das Telefonieren mittels Freisprechanlage. Die externe Vorrichtung kann zum Beispiel ein Telefon, ein Funkhörer, eine Smartwatch oder ein elektronischer Fahrzeugschlüssel sein. Aufgeladen werden kann eine beliebige, für das Laden über elektromagnetische Induktion (Standard Qi) ausgelegte Vorrichtung. Statt des Ausdrucks externe/aufzuladende Vorrichtung wird zuweilen nur der Ausdruck Vorrichtung verwendet, sofern aus dem Kontext hervorgeht, dass es sich um eine externe/aufzuladende Vorrichtung und nicht um die aufladende Vorrichtung, also um die erfindungsgemäße Vorrichtung 1 zum kabellosen Laden handelt.

In einer alternativen Ausführung der erfindungsgemäßen Vorrichtung umfasst diese Vorrichtung 1 zum kabellosen Laden drei Aufladungsflächen 2. Beispielsweise können zwei Aufladungsflächen 2 für das Laden von Telefonen ausgelegt werden und die dritte Aufladungsfläche kann kleiner sein und muss nicht eine eigene Antennenstruktur für passive Signalverstärkung umfassen. Alternativ können alle drei Flächen für das Laden von Telefonen ausgelegt werden. Dann wird das Laden von mehreren als zwei Vorrichtungen zeitgleich möglich.

Die oben genannte Vorrichtung kann ferner zum zeitgleichen kabellosen Laden von mehreren Vorrichtungen, insbesondere von mehreren Mobiltelefonen, auch in anderen Räumen mit schwächerer Qualität des mobilen Signals als in Fahrzeugen genutzt werden, insbesondere in Räumen mit höherer Abschirmwirksamkeit, beispielsweise über 20 dB. Es kann sich um andere Verkehrsmittel oder um Gebäude handeln. Die beschriebene Vorrichtung zum kabellosen Laden kann insbesondere an Orten und in Situationen zur Anwendung kommen, wo der Bedarf der Nutzung von mobilen Vorrichtungen auch während deren Aufladung besteht.

### Bezugszeichenliste

- 1 -: Vorrichtung zum kabellosen Laden
- 2 -: Aufladungsfläche
- 3 -: Fahrzeugantenne
- 4 -: Signalteiler
- 5 -: Aufzuladende Vorrichtung
- 6 -: Antennenstecker
- 7 -: Gehäuseoberteil
- 8 -: Gehäuseunterteil
- 9 -: Kühlgitter
- 10 -: Platte mit Antennenstrukturen
- 11 -: Spule
- 12 -: Spulenhalter
- 13 -: Abschirmplatte
- 14 -: Leiterplatte
- 15 -: Kühler
- 16 -: Einspeisungsstecker
- 17 -: Kühlkanal

## Patentansprüche

1. Vorrichtung (1) zum kabellosen Laden, die dazu eingerichtet ist, in einem Fahrzeug angeordnet zu werden und zwei Aufladungsflächen (2) aufweist, wobei jede Aufladungsfläche (2) wenigstens eine Spule (11) zum Generieren eines Magnetfeldes umfasst, wobei diese Vorrichtung (1) zum kabellosen Laden ferner ein System für passive Verstärkung eines mobilen Signals mit mindestens einer Antennenstruktur für die Aufladungsflächen (2) umfasst, **dadurch gekennzeichnet, dass** das System für passive Verstärkung zwei Antennenstrukturen für die Aufladungsflächen (2) und weiterhin einen Signalteiler (4) umfasst, wobei der Signalteiler (4) eingerichtet ist, mit einer Fahrzeugantenne (3) des Fahrzeugs verbunden zu werden, wobei der Signalteiler (4) mit einer unter der ersten Aufladungsfläche (2) angeordneten ersten Antennenstruktur für die Aufladungsfläche (2) und mit einer unter der zweiten Aufladungsfläche (2) angeordneten zweiten Antennenstruktur für die Aufladungsfläche (2) verbunden ist, wobei der Signalteiler (4) ein 3 dB Hybridkoppler ist.

2. Vorrichtung (1) zum kabellosen Laden nach Anspruch 1, **dadurch gekennzeichnet, dass** diese ferner eine datentechnisch mit einem Fahrzeug-Bus verbundene Steuereinheit umfasst.

3. Vorrichtung (1) zum kabellosen Laden nach beliebigen der vorgenannten Ansprüche, **dadurch gekennzeichnet, dass** jede Aufladungsfläche (2) drei Spulen (11) umfasst.

4. Vorrichtung (1) zum kabellosen Laden nach beliebigen der vorgenannten Ansprüche, **dadurch gekennzeichnet, dass** diese ein Alu-Kühlgitter (9) aufweist.

5. Vorrichtung (1) zum kabellosen Laden nach beliebigen der vorgenannten Ansprüche, **dadurch gekennzeichnet, dass** jede Aufladungsfläche (2) Antirutschelemente aufweist.

6. Vorrichtung (1) zum kabellosen Laden nach beliebigen der vorgenannten Ansprüche, **dadurch gekennzeichnet, dass** diese ferner eine Vorrichtung für drahtlose Kommunikation mit einem auf der Aufladungsfläche (2) angeordneten Gerät umfasst.

7. Vorrichtung (1) zum kabellosen Laden nach beliebigen der vorgenannten Ansprüche, **dadurch gekennzeichnet, dass** sie dazu eingerichtet ist, in der Mittelkonsole des Fahrzeugs angebracht zu werden.

8. Vorrichtung (1) zum kabellosen Laden nach Anspruch 7, **dadurch gekennzeichnet, dass** sie bei Anbringung in der Mittelkonsole des Fahrzeugs dazu eingerichtet ist, jede Aufladungsfläche (2) gegenüber der waagerechten Richtung um einen Winkel von wenigstens 15° in Fahrtrichtung abfallend zu neigen.

## Claims

1. A device (1) for wireless charging, which is configured to be arranged in a vehicle and has two charging surfaces (2), wherein each charging surface (2) comprises at least one coil (11) to generate a magnetic field, wherein said device (1) for wireless charging furthermore comprises a system for passive amplification of a mobile signal with at least one antenna structure for the charging surfaces (2), **characterized in that** the system for passive amplification comprises two antenna structures for the charging surfaces (2) and further comprises a signal splitter (4), wherein the signal splitter (4) is configured to be connected to a vehicle antenna (3) of the vehicle, wherein the signal splitter (4) is connected to a first antenna structure for the charging surface (2) arranged under the first charging surface (2) and to a second antenna structure for the charging surface (2) arranged under the second charging surface (2), wherein the signal splitter (4) is a 3 dB hybrid coupler.

2. The device (1) for wireless charging according to claim 1, **characterized in that** said device further comprises a control unit connected by means of data technology to a vehicle bus.

3. The device (1) for wireless charging according to any of the aforementioned claims, **characterized in that** each charging surface (2) comprises three coils (11).

4. The device (1) for wireless charging according to any of the aforementioned claims, **characterized in that** said device has an aluminum cooling grid (9).

5. The device (1) for wireless charging according to any of the aforementioned claims, **characterized in that** each charging surface (2) has anti-slip elements.

6. The device (1) for wireless charging according to any of the aforementioned claims, **characterized in that** said device further comprises a device for wireless communication with a device arranged on the charging surface (2).

7. The device (1) for wireless charging according to any of the aforementioned claims, **characterized in that** it is configured to be mounted in the center console of the vehicle.

8. The device (1) for wireless charging according to claim 7, **characterized in that** when mounted in the center console of the vehicle, it is configured to incline each charging surface (2) relative to the horizontal direction by an angle of at least 15° sloping in the direction of travel.

## Revendications

1. Dispositif (1) de charge sans fil, qui est conçu pour être disposé dans un véhicule et qui comprend deux surfaces de charge (2), dans lequel chaque surface de charge (2) comprend au moins une bobine (11) pour la production d'un champ magnétique, dans lequel ce dispositif (1) de charge sans fil comprend en outre un système pour l'amplification passive d'un signal mobile avec au moins une structure d'antenne pour les surfaces de charge (2), **caractérisé en ce que** le système pour l'amplification passive comprend deux structures d'antennes pour les surfaces de charge (2) ainsi qu'un diviseur de signaux (4), dans lequel le diviseur de signaux (4) est conçu pour être relié avec une antenne (3) du véhicule, dans lequel le diviseur de signaux (4) est relié avec une première structure d'antenne pour la surface de charge (2), disposée sous la première surface de charge (2), et avec une deuxième structure d'antenne pour la surface de charge (2), disposée sous la deuxième surface de charge (2), dans lequel le diviseur de signaux (4) est coupleur hybride 3 dB.

2. Dispositif (1) de charge sans fil selon la revendication 1, **caractérisé en ce qu'**il comprend en outre une unité de commande reliée, à l'aide d'une liaison de données, avec un bus du véhicule.

3. Dispositif (1) de charge sans fil selon l'une quelconque des revendications précédentes, **caractérisé en ce que** chaque surface de charge (2) comprend trois bobines (11).

4. Dispositif (1) de charge sans fil selon l'une quelconque des revendications précédentes, **caractérisé en ce qu'**il comprend une grille de refroidissement en alu (9).

5. Dispositif (1) de charge sans fil selon l'une quelconque des revendications précédentes, **caractérisé en ce que** chaque surface de charge (2) comprend des éléments antidérapants.

6. Dispositif (1) de charge sans fil selon l'une quelconque des revendications précédentes, **caractérisé en ce qu'**il comprend en outre un dispositif de communication sans fil avec un appareil disposé sur la surface de charge (2).

7. Dispositif (1) de charge sans fil selon l'une quelconque des revendications précédentes, **caractérisé en ce qu'**il est conçu pour être monté dans la console centrale du véhicule.

8. Dispositif (1) de charge sans fil selon la revendication 7, **caractérisé en ce qu'**il est conçu, lors du montage dans la console centrale du véhicule, pour incliner de manière descendante chaque surface de charge (2) par rapport à la direction horizontale d'un angle d'au moins 15° dans le sens de la marche.
